# EUROPÄISCHE PATENTSCHRIFT

(11) **EP 1 563 889 B1**
(45) Veröffentlichungstag und Bekanntmachung des Hinweises auf die Patenterteilung: **20.05.2009**
(21) Anmeldenummer: 05000778.0
(22) Anmeldetag: 15.01.2005
(51) Int. Cl.: B01D 46/24, B01D 46/04, B01D 46/10, B01D 46/12, B01D 46/42, B01D 46/52

(54) **Filternder Abscheider für partikelbelastete Gase**
Filtering apparatus for removing particles from gases
Dispositif de filtration pour séparer des particules de gaz

(30) Priorität: 17.02.2004 DE 202004002483 U
(43) Veröffentlichungstag der Anmeldung: 17.08.2005
(73) Patentinhaber: ISI-Industrie-Produkte GmbH, 53567 Buchholz-Mendt (DE)
(72) Erfinder: Mindnich, Lothar, 53757 Sankt Augustin (DE)
(74) Vertreter: Müller-Gerbes Wagner Albiger Patentanwälte

(56) Entgegenhaltungen:
- US-A- 5 043 000
- US-B1- 6 183 530

## Beschreibung

Gegenstand der vorliegenden Erfindung ist ein filternder Abscheider für partikelbelastete Gase, umfassend ein blockartiges Filterelement und eine in ihrer Form hieran angepaßte Druckluft-Abreinigungseinrichtung mit einem Druckluftringverteiler. Das blockartige Filterelement wird erfindungsgemäß als Filterblock bezeichnet.

Filter oder Abscheider für Gase werden beispielsweise dort eingesetzt, wo Partikel - verunreinigungen, wie z.B. Stäube, Fasern, Späne oder ähnliches aus einem Gasstrom abgetrennt und entsorgt oder einer Verwertung zugeführt werden sollen. Erfindungsgemäß wird das mit Partikeln belastete und hiervon zu reinigende Gas als Rohgas bezeichnet. Das durch Filter oder filternde Abscheider von Partikeln befreite und gereinigte Gas wird als Reingas bezeichnet.
Üblicherweise umfasst ein Filter oder filternder Abscheider ein oder mehrere Filterelemente, wobei diese als Filterschläuche, Filterpatronen, Filtertaschen, Filterplatten ausgeführt sein können. Diese sind strömungsmäßig zwischen einem Rohgasraum und einem Reingasraum angeordnet. Das Rohgas durchströmt das Filterelement von der Rohgasseite zur Reingasseite, wobei die Verunreinigungen auf der Rohgasseite des Filtermoduls abgeschieden werden. Die Rohgasseite wird auch als Anströmseite, die Reingasseite auch als Abströmseite des Filterelements bezeichnet.

Das Reingas wird aus dem Reingasraum des Filtergehäuses, durch eine Auslassöffnung beispielsweise an die Atmosphäre abgeführt. Auf der Anströmseite des Filtermoduls bildet sich während des Filtriervorganges eine ständig anwachsende Partikelschicht. Diese Partikelschicht wird auch als Filterkuchen bezeichnet. Zur Gewährleistung eines kontinuierlichen Betriebes des Filters oder Abscheiders muß eine Abreinigung der Filterelemente von den anhaftenden Verunreinigungen erfolgen.

Bekannte Methoden zur Abreinigung sind beispielsweise, das Rütteln, das Spülen mit Spülluft entgegen der Strömungsrichtung im Filterbetrieb, sowie die Druckluft-Impulsabreinigung. Bei der letztgenannten Methode werden vom Reingasraum aus, ein oder mehrere Filtermodule mit einem kurzen heftigen Druckluftimpuls beaufschlagt, so daß der gebildete Filterkuchen abgesprengt wird. Man unterscheidet zwischen einer sogenannten Online-Abreinigung, die ohne Abschaltung des Filters oder Abscheiders erfolgt, und einer Offline- Abreinigung, bei der der Filterbetrieb kurzzeitig unterbrochen wird. Der Filterkuchen wird üblicherweise in einem Partikelsammelbehälter aufgefangen, aus dem er nachfolgend entfernt wird.

Beim Einsatz von plissiertem Filtermaterial spielt der Abstand der Faltabschnitte und deren Ausgestaltung eine große Rolle. Die vertikale, flächige Anordnung solchen Filtermaterials in einer Filterplatte ist gegenüber einer zylindrischen Filtervorrichtung und einer sternförmigen Anordnung Filtermaterials gleichmäßiger, derart, dass die dem Abströmkanal zugewandten parallelen Falten-Kanten des Filtermaterials den gleichen Abstand zueinander einhalten, wie die Faltenkanten die dem Anströmkanal zugewandt sind. Das Filtermaterial wird hierdurch gleichmäßiger angeströmt und belastet. Der Druckabfall am Filtermaterial wird hierdurch deutlich verringert.

Im Stand der Technik sind verschiedene Filter und filternde Abscheider mit Abreinigungseinrichtungen bekannt.

Die DE 101 48 887 offenbart einen filternden Abscheider, der mit Filterpatronen oder Filtertaschen und einer Druckluft-Impulsabreinigung ausgerüstet ist. Korrespondierend zu der Impulsabreinigung zwischen den Filterelementen sind in deren Kopfbereich mit Druckluft beaufschlagte Düsenlanzen mit in Richtung des Staubbunkers gerichteten Bohrungen angeordnet. Zwischen benachbarten Filterelementen, die in unterschiedlichen Zyklen abgereinigt werden, sind Leitbleche angeordnet. Diese Leitbleche sind insbesondere dort angeordnet, wo sich Filterpatronen nebeneinander befinden, von denen die eine abgereinigt wird, während die andere das Rohgas filtert.

Die DE 33 41 065 offenbart einen filternden Abscheider der durch eine Trennwand in einen Filterschläuche aufnehmenden Staubgasraum oder einen Reingasraum mit mindestens zwei Kammern unterteilt ist. Die Filterschläuche werden in eine Richtung vom Roh- oder Rauchgas durchströmt und zur Abreinigung entgegengesetzt zum Spülgas gespült. Die Kammern sind mit einem Reingaskanal und einem Spülgaskanal verbindbar. Bei Abschaltung je einer Kammer vom Reingaskanal und Anschluß an den Spülgaskanal, wird dem Spülgaskanal und damit den Filtern Druckgas kurzzeitig zugeführt.

Die US 6290737 offenbart einen Staubfilter zur Reinigung staubbeladener Förderluft. In einem Gehäuse ist hierbei mindestens ein Filterelement angeordnet. Der Rohgasraum ist durch einen Zwischenboden vom Reingasraum getrennt. Im Zwischenboden sind Filterkörbe der Filterelemente und Tankboden-Luftdüsen/ -Ventile zur Abreinigung der Filterelemente angeordnet.

Zur Reinigung der Filterelemente wird in definierten Zeitabständen oder nach einem eingestellten Differenzdruck ein kurzer und kräftiger Druckluftstoß durch eine Spülluftdüse in das Filterelement entgegen der normalen Strömungsrichtung geblasen. Jedem Filterelement ist eine Spülluftdüse zugeordnet. Die Bereitstellung der Druckluft erfolgt durch einen gemeinsamen Druckraum der oberhalb des Reingasraumes angeordnet ist.

Weiterhin sind Entstaubungsgeräte mit runden, zylinderartig ausgestalteten Mehrzellen-Filterpatronen bekannt. An diesen Filterpatronen strömt das Rohgas gleichzeitig von aussen und innen durch ein plissiertes Filtermaterial. Das Reingas entweicht durch einen V-förmigen Innenraum. Die Abreinigung erfolgt durch Rütteln, mit Spülluft oder mit Druckluftstößen gegen die Anströmrichtung. Die zylinderartige Ausgestaltung bringt es mit sich, dass das plissierte Filtermaterial sternförmig angeordnet ist. Hierbei ist eine engere Anordung der inneren Faltenkanten vorgegeben. Dies bewirkt ein schnelleres Zusetzen des Filtermaterials mit Staub und einen höheren Druckabfall, als bei gleichmäßig flächig angeordnetem Material.

Ein Luftfilterelement, welches ebenfalls die Verwendung von plissiertern Filtermaterial vorsieht, wird in der US-5,043,000 beschrieben. Hierbei wird ein Vielzahl von plissierten Filterpapiereinheiten so angeordnet, daß die Falten der Filterpapiereinheiten im Wesentlichen quer zur Gasströmungsrichtung zu liegen kommen und die Filterpapiereinheiten der luftfiltrierenden Vorrichtung an ihren Rändern über einen Verbinder parallel miteinander verbunden sind.

Die US-6,183,530 beschreibt einen Festkörperfilter mit selbsttragenden Filterelementen bestehend aus porösen, zusammengesinterten Partikeln, befestigt in einem Kunststoffträger.

Bei den bisher bekannten Filter-Vorrichtungen mit Druckluftabreinigungseinrichtungen wird das notwendige Volumen zur Abreinigung der Filterelemente in einem Drucklufttank innerhalb oder ausserhalb der Filter-Vorrichtung bereitgestellt. Die Tankform des Druckluftbehälters nachteilig im Hinblick auf die Kompaktheit und den Platzbedarf der Filter-Vorrichtung.

### Aufgabe der Erfindung

Aufgabe der vorliegenden Erfindung ist es, die Nachteile des Standes der Technik zu überwinden und einen filternden Abscheider bereitzustellen, der gegenüber dem Stand der Technik einen größeren Gasvolumenstrom bei einer konstanten Filterflächenbelastung, sowie eine kompaktere Bauweise des Filtergehäuses bei konstantem Gasvolumenstrom ermöglicht und es soll erfindungsgemäß ein filternder Abscheider bereitgestellt werden, der es ermöglicht eine Druckluftstoßabreinigung durchzuführen, ohne den Saug- bzw. Filterbetrieb im gesamten abzuschalten. Hierdurch soll eine kontinuierliche Arbeitsweise des filternden Abscheiders ermöglicht werden.

Weitere Aufgabe der vorliegenden Erfindung ist es einen filternden Abscheider bereitzustellen, in dem die Druckluftstoß-Abreinigungsvorrichtung kompakt und innerhalb des Filtergehäuses angeordnet ist. Hierbei soll die Druckluhstoß-Abreinigungsvorrichtung das für die Druckluftstoßabreinigung erforderliche Volumen aufweisen, ohne dass ein zusätzlicher Druckluftvorratstank am oder im Filtergehäuse erforderlich ist.

Gelöst werden die Aufgaben mit den technischen Merkmalen des unabhängigen Anspruchs. Bevorzugte Ausführungsformen sind in den abhängigen Ansprüchen dargestellt.

Der erfindungsgemäße filternde Abscheider umfasst in der einfachsten Ausführungsform ein Filtergehäuse, welches einen Rohgasraum und einen Reingasraum geteilt ist. Rohgasseitig im Gehäuse ist ein Filterblock angeordnet.
Der Filterblock ist erfindungsgemäß im wesentlichen quaderförmig ausgestaltet. Als quaderförmig wird ein von sechs Rechtecken gebildeter Körper verstanden. Der Filterblock wird von vier im wesentlichen vertikal und im rechten Winkel zueinander angeordneten Filtereinheiten, sowie Abdeckungs- Rahmen- und Stützelementen in einfacher und kompakter Bauweise gebildet. Unter Rahmen- und Stützelemente werden Erfindungsgemäß alle Bauteile verstanden, die die Filtereinheiten miteinander verbinden und zum Filterblock zusammenfügen. Jeder Filtereinheit ist eine innere und eine äußere Filterplatte zugeordnet. Die Filtereinheiten sind zum Rohgasraum geschlossen und zur Reingasseite geöffnet ausgeführt. Der Filterblock ist so ausgestaltet und im Filtergehäuse angeordnet, dass der Gasdurchtritt vom Rohgasraum in den Reingasraum ausschließlich durch die Filtereinheiten des Filterblocks erfolgen kann. Der Filterblock kann vorteilhafterweise leicht ausgetauscht werden.

Unterhalb des Filterblocks ist im Filtergehäuse eine Einlassöffung für das Rohgas angeordnet, durch die das Rohgas in den Rohgasraum des Abscheiders eingeleitet wird. Unterhalb des Gaseinlasses ist im Filtergehäuse eine Partikelsammeleinrichtung angeordnet. Oberhalb des Trennblechs im Reingasraum, befindet sich eine Druckluftstoß-Abreinigungvorrichtung. Diese umfasst erfindungsgemäß einen Druckluftringverteiler, der über einen Anschlußstutzen an ein Druckluftversorgungssystem angeschlossen ist. Von dem Druckluftringverteiler ausgehend sind, Düsenlanzen mit Düsen geradlinig über die Reingasaustritte des Filterblocks geführt. Die Ansteuerung der Düsenlanzen erfolgt über schnell reagierende Ventile.

Der Druckluftringverteiler ist umlaufend im Reingasraum an der Innenseite des Filtergehäuses angeordnet. Vorteilhafterweise kann durch den Druckluftringverteiler das für die Abreinigung der Filtereinheiten notwendige Volumen an Druckluft zur Verfügung gestellt werden ohne das im oder am Gehäuse ein zusätzlicher Druckluftvorratsbehälter bereitgestellt werden muß. Dies ermöglicht eine kompaktere Bauweise des gesamten Filtergehäuses. Oberhalb der Abreinigungsvorrichtung befindet sich ein Auslass durch den das Reingas aus dem Filtergehäuse, beispielsweise an die Atmosphäre abgeführt wird. Der Filterblock und die Druckluftabreinigungsvorrichtung sind erfindungsgemäß in Form und Funktion aufeinander abgestimmt.

Der Filterblock wird von vier im wesentlichen vertikal, im rechten Winkel zueinander, angeordneten Filtereinheiten gebildet Eine Filtereinheit umfasst jeweils eine innere Filterplatte und eine äußere Filterplatte. An ihrem oberen und unteren Ende werden die Filterplatten plan, durch eine, die vier Filtereinheiten verbindende, flache, gasundurchlässige Abdeckung begrenzt. Die dem Reingasraum zugewandte Abdeckung des Filterblocks wird erfindungsgemäß als obere Abdeckung, die dem Rohgasraum zugewandte Abdeckung als untere Abdeckung bezeichnet. Die inneren und äußeren Filterplatten sind voneinander beabstandet angeordnet und an ihrem unteren Ende durch die untere Abdeckung miteinander verbunden und zur Rohgasseite geschlossen ausgeführt. Der zum Reingasraum geöffnete Zwischenraum der durch die inneren und äußeren Filterplatten gebildet wird, wird erfindungsgemäß als Abströmkanal bezeichnet. Die obere Abdeckung weisst Reingasaustritte auf und schließt den inneren Anströmkanal zur Reingasseite dicht ab. An der oberen Abdeckung können Einrichtungen zur Befestigung des Filterblocks im Filtergehäuse vorgesehen sein. Die inneren Filterplatten umgeben einen Hohlraum im Kern des Filterblocks. Der Hohlraum wird erfindungsgemäß als innerer Anströmkanal bezeichnet. Die äußeren Filterplatten bilden die vertikalen Äußeren Begrenzungswände des Filterblocks und werden vom äußeren Anströmkanal umgeben. Die Filtereinheiten sind so ausgestaltet, dass der Filterblock von innen und von aussen mit Rohgas angeströmt wird. Erfindungsgemäß wird so ein Filterelement mit einer kompakten quaderförmigen Bauweise bereitgestellt. Die rechteckige Anordnung der Filtereinheiten ermöglicht eine vorteilhafte flächige Anordnung des Filtermaterials der Filterplatten. Hierdurch ergibt sich eine verbesserte Durchströmung des Filterblocks.

Der Gasstrom tritt aus dem Rohgasraum durch die inneren und die äußeren Filterplatten in den Abströmkanal, wobei die im Gasstrom mitgeführten Partikel an der Anströmseite der Filterplatten abgeschieden werden. Der Gasstrom strömt von dort nach oben durch die Öffnungen im Filterblock und im Trennblech in den Reingasraum. Die Öffnungen im Filterblock und im Trennblech durch die das Reingas in den Reingasraum tritt liegen passgenau übereinander und werden erfindungsgemäß als Reingasaustritte bezeichnet. Mit dem erfindungsgemäßen rechteckigen Filterblock ist es möglich gegenüber den bekannten Mehrzellenfilterpatronen eine größere Filterfläche mit verbesserten Filtereigenschaften bereitzustellen. Vorteilhafterweise kann so ein größerer Gas-Volumenstrom, bei gleicher Baugröße in der gleichen Zeit effektiv gefiltert werden, sowie bei gleichem Gas-Volumenstrom ein erfindungsgemäßer Filterblock kleinerer Baugröße eingesetzt werden.

Jede Filtereinheit ist seitlich durch eine Zellenwand von den benachbarten Filtereinheiten getrennt. Die Zellenwände verbinden die inneren und äußeren Filterplatten an deren vertikalen Kanten miteinander und bilden so einen weiteren Teil der Stützkonstruktion des Filterblocks. Hierdurch entstehen vier voneinander getrennte Abströmkanäle. Die Zellenwände sind oben und unten jeweils mit der oberen und unteren Abdeckplatte verbunden, wodurch sich eine vorteilhafte Stabilisierung und kompakte Bauweise des Filterblocks ergibt.

Der Filterblock und das Filtergehäuse sind im Bereich des Filterblocks durch Zellenbleche in vier gleich aufgebaute Filtersektoren unterteilt. Hierbei wird der innere Anströmkanal durch Zellenbleche in vier innere Anströmkanäle geteilt und der äußere Anströmkanal durch weitere Zellenbleche in vier äußere Anströmkanäle geteilt. Unter dem äußeren Anströmraum wird der Raum zwischen den äußeren Filterplatten und dem Filtergehäuse verstanden. Jeder Filtersektor umfasst so einen inneren Anströmkanal, eine innere Filterplatte, einen Abströmkanal für das Reingas, eine äußere Filterplatte und einen äußeren Anströmkanal. Vorteilhafterweise sind die Filtersektoren so ausgestaltet, dass sie unabhängig voneinander filtrieren und abgereinigt werden können. Durch die Zellenbleche wird ein Wandern der durch den Druckluftstoß abgereinigten Partikel zu den benachbarten Filtersektoren verhindert.

In einer besonders bevorzugten Ausführungsform ist der Filterblock im Querschnitt konzentrisch im Filtergehäuse angeordnet, wobei die Zellenbleche derart angeordnet sind, dass sie mit den Zellenwänden auf zwei sich mittig im Filterblock kreuzenden Diagonalen durch das Filtergehäuse liegen. Ein weiterer Vorteil ist, dass der Filterblock durch die Zellenbleche zusätzlich stabilisiert wird.

Erfindungsgemäß ist der Filterblock jeweils so dimensioniert, daß insbesondere im Hinblick auf die Abmessungen des Filtergehäuses der maximal mögliche Gasvolumenstrom effektiv gefiltert werden kann.

Die Filterplatten umfassen erfindungsgemäß das eigentliche Filtermaterial und an dessen Umfangsrand ein Rahmenelement an dem dieses befestigt und fixiert ist. Als Filtermaterial für die Filterplatten können Papier-, Faser- oder Kunststoffvliese, -matten oder Filze verwendet werden, die sowohl für den Filterbetrieb als auch für den Abreinigungsvorgang die erforderliche Stabilität und Festigkeit aufweist. Das Filtermaterial ist plissiert ausgeführt, also zickzackförmig zusammengefaltet, wodurch die zur Verfügung stehende Filterfläche deutlich vergrößert wird. Bei der plissierten Ausführung wirkt sich bei den erfindungsgemäßen Filterplatten besonders vorteilhaft aus, dass neben der Flächenvergrößerung auch eine Reduktion der Anströmgeschwindigkeit des Gases und damit eine Erhöhung der Filterleistung erfolgt. Die Faltabschnitte sind so ausgelegt, dass bei guter Filterleistung ein relativ geringer Druckabfall des Gasstroms erfolgt.

Die Druckluftstoßabreinigungvorrichtung kann sowohl offline, als auch im Onlinebetrieb des filternden Abscheiders eingesetzt werden, wobei die online-Abreinigung erfindungsgemäß bevorzugt ist. Der Druckluftringverteiler ist erfindungsgemäß so dimensioniert, das ein oder mehrere Filtersektoren gleichzeitig abgereinigt werden können, ohne das ein zusätzlicher Drucklufttank im oder am Filtergehäuses notwendig ist. Besonders bevorzugt, wird ein Filtersektor abgereinigt während die anderen Filtersektoren den Filterbetrieb aufrecht erhalten. Die Abreinigung erfolgt durch einen kurzen Druckluftstoß aus den Düsen der Düsenlanzen in die Reingasaustritte der Filtersektoren. Die Düsen und Düsenlanzen können beispielsweise venturiartig konstruiert sein. Der Druckluftstoß erfolgt entgegen der normalen Richtung des Gasstroms im Filtrierbetrieb und reißt dabei einen Sekundärgasstrom aus dem Reingasraum mit. Durch die erfindungsgemäße Konstruktion der Abreinigungsvorrichtung kann mit hoher Geschwindigkeit eine große Luft- bzw. Gasmenge in die Filtereinheiten eingeleitet werden. Die Filterplatten werden dabei mit einem gezielten und sehr wirksamen Druckluftstoß beaufschlagt, so daß die abgelagerte Partikelschicht abgesprengt wird und in den dafür vorgesehenen Sammelbehälter fällt.

Weitere Einzelheiten, Merkmale und Vorteile ergeben sich aus der nachfolgenden Beschreibung der Figuren, die eine Ausführungsform des erfindungsgemäßen filternden Abscheider zeigen. Die Figuren sollen die Erfindung näher erläutern ohne sie hierauf zu beschränken.

### Figuren

- Figur 1: zeigt eine Ausführungsform des erfindungsgemäßen filternden Abscheiders im Längsschnitt durch den Kreuzungspunkt der Zellenbleche im Kern des Filterblocks, umfassend eine erfindungsgemäße Druckluftstoßabreinigungsvorrichtung und einen Filterblock.
- Figur 2: zeigt die Ausführungsform nach Figur 1 im Querschnitt entlang der Linie A-A im Reingasraum oberhalb der erfindungsgemäßen Druckluftstoßabreinigungsvorrichtung.
- Figur 3: zeigt die Ausführungsform nach Figur 1 im Querschnitt entlang der Linie B-B durch den oberen Teil des Filterblocks.
- Figur 4: zeigt eine Ausführungsform des erfindungsgemäßen Filterblocks mit vier Filtersektoren in einer Ansicht schräg von oben.
- Figur 5: zeigt eine Ausführungsform des erfindungsgemäßen Filterblocks mit vier Filtersektoren in einer Ansicht schräg von unten.

In den jeweiligen Figuren sind gleiche Teile mit gleichen Bezugszeichen, bzw. gleichen Bauteilbezeichnungen versehen.

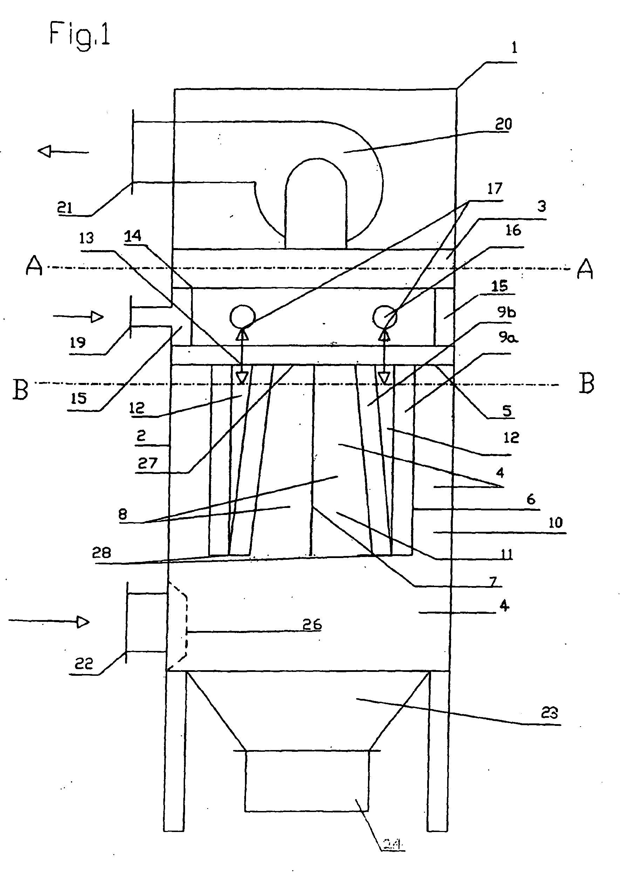

**Figur 1** zeigt einen Längsschnitt durch einen erfindungsgemäßen filternden Abscheider (I). Der Schnitt ist hierbei durch den Kreuzungspunkt der Zellenbleche (7) im Filterblock (6) geführt. Der filternde Abscheider (I) umfasst ein Filtergehäuse (2) weiches in einen Reingasraum (3) und einen Rohgasraum (4) geteilt ist. Die Trennung vom Reingasraum (3) und Rohgasraum (4) erfolgt durch ein durch Reingasaustritte durchbrochenes Trennblech (5). Im Kopfbereich des Filtergehäuses über dem Reingasraum (3) ist in dieser Ausführungsform ein Sauggebläse (20) mit einem nachgeschalteten Gasauslass (21) angeordnet. Durch den Gasauslass (21) wird das Reingas aus dem filternden Abscheider (I) abgeführt. Rohgasseitig (4) im Filtergehäuse (2) ist ein Filterblock (6) angeordnet. Dieser Filterblock (6) ist durch innere und äußere Zellenbleche (7), sowie die Zellenwände (25) zwischen den Filtereinheiten in vier Filtersektoren (8) geteilt wobei die Figur 1 zwei einander gegenüberliegende Filtersektoren (8) im Längsschnitt zeigt. Jeder Filtersektor (8) beinhaltet je eine äußere Filterplatte (9a) und eine innere Filterplatte (9b). Die äußeren Filterplatten (9a) bilden mit der Seitenwand des Filtergehäuses (2) einen äußeren Rohgasanströmkanal (10). Die inneren Filterplatten (9b) bilden mit den Zellenblechen (7) ein inneren Rohgasanströmkanal (II). Zwischen den äußeren Filterplatten (9 a) und den inneren Filterplatten (9 b) befindet sich der Reingasabströmkanal (12) durch den das Reingas durch die Reingasaustritte (13) in den Reingasraum (3) einströmt. Der Reingasabströmkanal (12) ist durch Zellenwände (25) in vier getrennte Reingasabströmkanäte (12) geteilt.
In der gezeigten erfindungsgemäßen Ausführungsform sind die inneren Filterplatten (9b) zum Kern des Filterblocks (6) gekippt ausgeführt. Der innere Anströmkanal (11) im Filterblock (6) ist so nach oben im Querschnitt verjüngt. Im Längschnitt ergibt sich hierdurch für den inneren Anströmkanal (11) eine trapezartige Ausgestaltung. Der Abströmkanal (12) zwischen den inneren und äußeren Filterplatten (9a, 9b) ist im Querschnitt nach oben erweitert. Vorteilhafterweise wird durch diese Anordnung der Filterplatten (9 a,b) die Anströmung mit dem Rohgas und die Abströmung des Reingases verbessert und der Druckabfall des Gasstromes verringert Oberhalb des Trennblechs (5) ist die erfindungsgemäße Druckluftstoß-Abreinigungsvorrichtung (14) angeordnet. Die Druckluftstoß-Abreinigungsvorrichtung (14) umfasst einen Druckluftringverteiler (15) der umlaufend an der Innenwand Filtergehäuses (2) angeordnet ist. Der Druckluftringverteiler (15) ist an die äußeren Abmessungen des Filtergehäuses (2) angepasst. Vom Ringverteiler aus sind Düsenlanzen (16) mit Düsen (17) über integrierte, schnell reagierenden Ventile (18) geradlinig genau über die Reingasaustritte (13) geführt. Der Druckluftringverteiler (15) wird über einen Anschlußstutzen (19) an einen Druckluftversorgungssystem angeschlossen. Durch diese Konstruktion kann eine große Luft-bzw. Gasmenge in kürzester Zeit in die Filtereinheiten eingeleitet werden, so dass die Filterplatten (9a, 9b) mit einem gezielten und sehr wirksamen Druckluftstoß beaufschlagt werden können. Dies bewirkt, dass die abgelagerte Partikelschicht abgesprengt wird und in den dafür vorgesehenen Sammelbehälter (24) fällt, der im unteren Teil des Filtergehäuses (2) angeordnet ist. Die Filtereinheiten können einzeln oder in Gruppen abgereinigt werden. Dies kann über eine nicht gezeigte Steuereinheit reguliert werden.
Unterhalb des Filterblocks (6) ist im Filtergehäuse (2) ein Einlass für das Rohgas (22) angeordnet. Vorteilhafterweise ist in der gezeigten Ausführungsform dem Gaseinlass eine Verteilereinrichtung (26) nachgeschaltet. Diese Verteilereinrichtung (26) bewirkt, das im strömungsmäßig nachgeschalteten Teil des Rohgasraumes (4) unterhalb des Filterblocks (6) eine Verteilung des Rohgasstromes erfolgt, so daß die Anströmung des Filterblocks (6) gleichmäßiger erfolgen kann. Unterhalb der Rohgaseintrittsöffnung (22) befindet sich ein Partikelbunker (23) mit einem Sammelbehälter (24) in dem die abgereinigten Partikel gesammelt werden und diesem nachfolgend entnommen werden können.

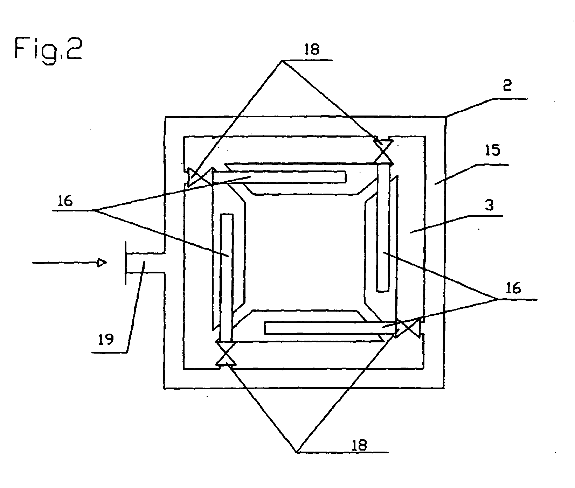

**Figur 2** zeigt die erfindungsgemäße Ausführungsform des filternden Abscheiders (1) in Figur 1 im Querschnitt durch die Linie A-A. Der Schnitt führt durch die erfindungsgemäße Druckluftstoß-Abreinigungsvorrichtung (14), die oberhalb des Trennblechs (5) reingasseitig angeordnet ist. An der Innenseite des Filtergehäuses (2) ist umlaufend ein Druckluftringverteiler (15) angeordnet. Über integrierte, schnell reagierende Ventile (18) sind Düsenlanzen (16) geradlinig über die Reingasaustritte (13) geführt. Die Ventile (18) können als Membranventile ausgeführt sein. Die Düsenlanzen (16) weisen erfindungsgemäß mehrere Düsen auf. Hierdurch ist es möglich, kurzfristig eine große Druckluftmenge in den Abströmkanal (12) einzublasen, so dass die angelagerte Partikelschicht abgesprengt wird und eine effektive Reinigung der Filterplatten (9a,9b) erfolgt. Der Druckluftringverteiler (15) ist über einen Anschlußstutzen (19) an ein Druckluftversorgungssystem angeschlossen. Über den Druckluftringverteiler (15) ist es möglich, dass für die Druckluftstoß-Abreinigung erforderliche Volumen bereitzustellen, ohne das im oder am Filtergehäuse (2) ein zusätzlicher Drucklufttank notwendig ist. Es können einzelne oder mehrere Filtersektoren (8) gleichzeitig abgereinigt werden. Die schnell reagierenden Ventile (18) können in einer bevorzugten Ausführungsform des filternden Abscheiders (1) von der atmosphärischen Seite des Filtergehäuses (2) zur Inspektion und Instandsetzung zugänglich ausgestaltet sein. Zu diesem Zweck können im Filtergehäuse (2) dicht schließbare Wartungsklappen vorgesehen sein. Geeignete Ventile (18) sind sogenannte Durchsteckventile. Derartige Ventile sind im Grundsatz bekannt und weisen den Vorteil auf, daß sie bei Funktionsstörungen oder zu Wartungszwecken von außen, d.h. ohne Öffnen des Gehäuses entnommen oder ersetzt werden können.

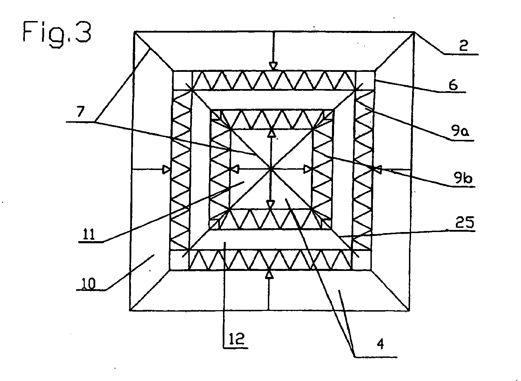

**Figur 3** zeigt den erfindungsgemäßen filternden Abscheider (I) aus Figur 1 im Querschnitt an der Linie B-B. Der Schnitt führt durch den Filterblock (6). Der Filterblock (6) ist konzentrisch im Filtergehäuse (2) angeordnet. Die inneren und die äußerer Filterplatten (9a, 9b) bilden ein inneres und ein äußeres Filterplatten-Rechteck miteinander. Die Filterplatten (9a, 9b) beinhalten plissiertes Filtermaterial und sind seitlich durch eine im rechten Winkel abgekantete Leiste begrenzt und miteinander zu einem geschlossenen Rechteck verbunden. Vorteilhafterweise wird durch den Einsatz von plissiertem Filtermaterial die Filterfläche deutlich vergrößert, sowie die Anströmgeschwindigkeit reduziert, so daß sich eine verbesserte Filterwirkung erzielen läßt.

Erfindungsgemäß sind die Faltabschnitte so ausgelegt, dass ein möglichst geringer Druckabfall erfolgt. Hierbei spielt der Abstand der Faltabschnitte und deren Ausgestaltung eine große Rolle. Die vertikale, flächige Anordnung des Filtermaterials in den Filterplatten (9a, 9b) ist gegenüber einer zylindrischen Filtervorrichtung und einer sternförmigen Anordnung Filtermaterials, wie sie im Stand der Technik bekannt ist, gleichmäßiger derart, dass die dem Abströmkanal (12) zugewandten parallelen Falten-Kanten des Filtermaterials den gleichen Abstand zueinander einhalten, wie die Faltenkanten die den Anströmkanälen (10, 11) zugewandt sind. Vorteilhafterweise kann das Filtermaterial hierdurch leicher abgereinigt werden. Die erforderlichen Faltabschnittsgröße wird über die gesamte Fläche der Filterplatte eingehalten. Das Filtermaterial wird hierdurch gleichmäßiger angeströmt und belastet. Der Druckabfall am Filtermaterial wird hierdurch deutlich verringert.

Durch die inneren und äußeren Zellenbleche (7), sowie die Zellenwände (25) wird das Filtergehäuse (2) in vier gleiche Filtersektoren (8) geteilt. In jedem Filtersektor (8) wird zwischen der äußeren Filterplatte (9a) und dem Filtergehäuse (2) ein äußerer Rohgasanströmkanal (10), und zwischen der inneren Filterplatte (9b) und den Zellenblechen (7) einer innerer Rohgasanströmkanal (11) gebildet. Zwischen der äußeren Filterplatte (9a) und der inneren Filterplatte (9b) wird jeweils ein Reingasabströmkanal (12) gebildet. Das Rohgas strömt durch die inneren und die äußeren Filterplatten (9a, 9b) in den Abströmkanal (12). Die Strömungsrichtung des Gases ist durch Pfeile dargestellt. Die durch die Filterplatten (9a, 9b) und Zellenwände (25) gebildeten Abströmkanäle (12) sind im Querschnitt trapezartig ausgestaltet.

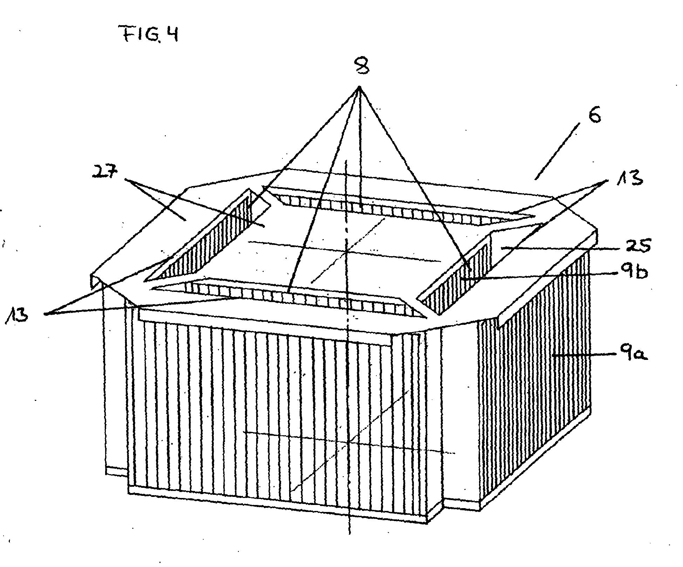

**Figur 4** zeigt eine Ausführungsform des erfindungsgemäßen Filterblocks (6) mit vier Filtersektoren (8) in einer Ansicht schräg von oben. Die Filterplatten (9a, 9b) werden aus plissiertes Filtermaterial und Rahmenelementen gebildet. Die Fiterplatten (9a, 9b) sind im rechten Winkel zueinander angeordnet. Die obere Abdeckung (27) weist trapezartige Reingasaustritte (13) auf und verbindet mit den Zellenwänden (25) die inneren und äußeren Filterplatten (9a, 9b) miteinander. Die obere Abdeckung (27) überragt in der gezeigten Ausführungsform an den Kanten den Umfang der äußeren Filterplatten (9a) . Der überstehende Rand der Abdeckung (27) ist abgekantet ausgeführt. Dieser abgekantete Rand kann als Halteeinrichtung für die Befestigung im Filtergehäuse (2) dienen.

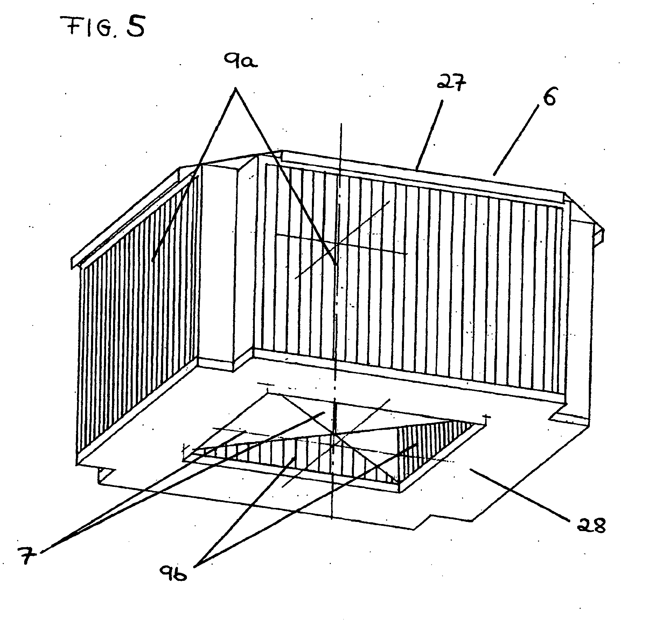

**Figur 5** zeigt eine Ausführungsform des erfindungsgemäßen Filterblocks (6) mit vier Filtersektoren (8) in einer Ansicht schräg von unten. Die untere Abdeckplatte (28) verbindet die vier Filtereinheiten miteinander und umgibt den inneren Anströmkanal (11). Der innere Anströmkanal (11) ist durch die inneren Zellenbleche (7) in vier innere Rohgasanströmkanäle (11) geteilt, die jeweils einem Filtersektor (8) zugeordnet sind.

### Bezugszeichenliste

- 1: Filternder Abscheider
- 2: Filtergehäuse
- 3: Reingasraum
- 4: Rohgasraum
- 5: Trennblech
- 6: Filterblock
- 7: Zellenbleche
- 8: Filtersektoren
- 9: Filterplatten (innere Filterplatte 9b, äußere Filterplatten 9a)
- 10: äußerer Rohgasanströmkanal
- 11: innerer Rohgasanströmkanal
- 12: Reingasabströmkanal
- 13: Reingasaustritt
- 14: Druckluftstoß-Abreinigungsvorrichtung
- 15: Druckluftringverteiler
- 16: Düsenlanzen
- 17: Düsen
- 18: Ventile
- 19: Anschlußstutzen
- 20: Sauggebläse
- 21: Gasauslass
- 22: Gaseinlass
- 23: Partikelbunker
- 24: Sammelbehälter
- 25: Zellenwand
- 26: Verteilereinrichtung
- 27: obere Abdeckung
- 28: untere Abdeckung

## Patentansprüche

1. Filternder Abscheider (1) für partikelbelastete Gase, umfassend ein im Querschnitt rechteckiges Filtergehäuse (2), welches in einen Rohgasraum (4) und einen Reingasraum (3) unterteilt ist, einen Gaseinlass (22), ein Filterelement und einen Gasauslass (21) für das gereinigte Gas, wobei das Filterelement ein Filterblock (6) ist, der im wesentlichen quaderförmig ausgestaltet ist und vier im wesentlichen vertikal und im rechten Winkel zueinander angeordnete, zum Rohgasraum (4) geschlossene und nach oben zum Reingasraum geöffnete Filtereinheiten, sowie Rahmen- und Stützelemente umfasst, **dadurch gekennzeichnet, dass** eine Partikelsammeleinrichtung vorgesehen ist, dass der Filterblock (6) und das Filtergehäuse (2) im Bereich des Filterblocks (6) durch Zellenbleche (7) und Zellenwände (25) in vier, gleich aufgebaute, voneinander unabhängig filtrierende und abreinigbare Filtersektoren (8) geteilt ist, dass jeder Filtersektor einen inneren Rohgasanströmkanal (11), eine innere Filterplatte (9b), einen Reingasabströmkanal (12), eine äußere Filterplatte (9a) und einen äußeren Rohgasanströmkanal (10) aufweist, und dass die inneren Filterplatten (9b) der Filtersektoren ein inneres Filterplattenrechteck miteinander bilden und die äußeren Filterplatten (9a) der Filtersektoren ein äußeres Filterplattenrechteck miteinander bilden, wobei ein Filtermaterial der Filterplatten plissiert ist.

2. Filternder Abscheider nach Anspruch 1 **dadurch gekennzeichnet, dass** jede Filtereinheit an der inneren Filterplatte (9b) und der äußeren Filterplatte (9a) mit Rohgas angeströmt wird und zwischen der inneren und der äußeren Filterplatte (9b, 9a) der Abströmkanal (12) für das gereinigte Gas gebildet wird, und dass die Filtereinheiten an ihrem oberen und unteren Ende plan durch flache, gasundurchlässige, die Filtereinheiten verbindende Abdeckungen (27, 28) begrenzt werden, wobei die obere Abdeckung (27) durch Reingasaustritte (13) durchbrochen ist.

3. Filternder Abscheider nach Anspruch 1 oder 2 **dadurch gekennzeichnet, dass** jede Filtereinheit seitlich durch Zellenwände (25) begrenzt ist, wobei die Zellenwände (25) die Kanten der inneren und äußeren Filterplatten (9a, 9b) miteinander verbinden.

4. Filternder Abscheider nach einem der vorhergehenden Ansprüche, **dadurch gekennzeichnet, dass** eine Druckluftstoß-Abreinigungsvorrichtung (14) im Filtergehäuse (2) angeordnet ist, die einen Druckluftringverteiler (15) umfasst, der umlaufend innerhalb des Filtergehäuses (2) im Reingasraum (3) angeordnet ist und von dem ausgehend, über schnell reagierende Ventile (18), Düsenlanzen (16) geradlinig über die Reingasaustritte (13) geführt sind.

5. Filternder Abscheider nach nach einem der vorhergehenden Ansprüche, **dadurch gekennzeichnet, dass** die Zellenwände (25) und Zellenbleche (7) im Querschnitt auf zwei sich mittig im Filterblock (6) kreuzenden Diagonalen durch das Filtergehäuse (2) liegen.

## Claims

1. Filtering separator (1) for gases loaded with particles, comprising a filter housing (2), which is rectangular in cross section and is divided into a crude gas chamber (4) and a pure gas chamber (3), a gas inlet (22), a filter element and a gas outlet (21) for the purified gas, the filter element being a filter block (6), which is substantially cuboidal and comprises four filter units which are arranged substantially vertically and at right angles to one another, are closed with respect to the crude gas chamber (4) and open at the top to the pure gas chamber, as well as frame and support elements, **characterised in that** a particle collecting device is provided, **in that** the filter block (6) and the filter housing (2) in the region of the filter block (6) are divided by cell plates (7) and cell walls (25) into four, identically constructed, mutually independent filtering and cleanable filter sectors (8), **in that** each filter sector has an inner crude gas inflow channel (11), an inner filter plate (9b), a pure gas outflow channel (12), an outer filter plate (9a) and an outer crude gas inflow channel (10), and **in that** the inner filter plates (9b) of the filter sectors form an inner filter plate rectangle with one another and the outer filter plates (9a) of the filter sectors form an outer filter plate rectangle with one another, a filter material of the filter plates being pleated.

2. Filtering separator according to claim 1, **characterised in that** each filter unit at the inner filter plate (9b) and the outer filter plate (9a) has crude gas flowing onto it and the outflow channel (12) for the purified gas is formed between the inner and the outer filter plate (9b, 9a), and **in that** the filter units are limited at their upper and lower ends by flat, gas-impermeable covers (27, 28) connecting the filter units, the upper cover (27) being penetrated by pure gas outlets (13).

3. Filtering separator according to claim 1 or 2, **characterised in that** each filter unit is laterally limited by cell walls (25), the cell walls (25) connecting together the edges of the inner and outer filter plates (9b, 9a).

4. Filtering separator according to any one of the preceding claims, **characterised in that** a compressed air impact cleaning device (14) is arranged in the filter housing (2), which comprises a compressed air ring distributor (15), which is peripherally arranged inside the filter housing (2) in the pure gas chamber (3) and nozzle lances (16) are guided, proceeding therefrom, via rapidly reacting valves (18), linearly via the pure gas outlets (13).

5. Filtering separator according to any one of the preceding claims, **characterised in that** the cell walls (25) and the cell plates (7) rest, in cross section, on two diagonals through the filter housing (2) that cross one another centrally in the filter block (6).

## Revendications

1. Séparateur filtrant (1) pour gaz chargés de particules, comprenant un carter de filtre (2) de coupe triangulaire, lequel est divisé en une chambre pour gaz brut (4) et une chambre pour gaz épuré (3), une entrée de gaz (22), un élément filtrant et une sortie de gaz (21) pour le gaz épuré, l'élément filtrant étant un bloc de filtre (6), lequel est configuré essentiellement en carré et comporte quatre blocs filtrants essentiellement verticaux et agencés l'un par rapport à l'autre en angle droit, fermés à la chambre pour gaz bruts (4) et ouverts vers le haut à la chambre pour gaz épurés, ainsi que des éléments d'encadrement et des organes d'appui, **caractérisé en ce qu'**un dispositif collecteur de particules est prévu, **en ce que** le bloc de filtre (6) et le carter de filtre (2) est divisé, à l'endroit du bloc de filtre (6), par des tôles cellulaires (7) et des parois cellulaires (25) en quatre secteurs de filtrage (8) de construction identique, filtrant de manière indépendante et nettoyables, **en ce que** chaque secteur de filtrage présente un canal intérieur d'afflux des gaz bruts (11), une plaque de filtre intérieure (9b), un canal d'évacuation des gaz épurés (12), une plaque de filtre extérieure (9a) et un canal d'afflux des gaz bruts extérieur (10) et **en ce que** les plaques de filtre intérieures (9b) des secteurs de filtrage forment l'une avec l'autre un rectangle intérieur de plaques de filtre et les plaques de filtre extérieures (9a) des secteurs de filtrage forment l'une avec l'autre un rectangle extérieur de plaques de filtre, un matériau filtrant des plaques de filtre étant plissé.

2. Séparateur filtrant selon la revendication 1, **caractérisé en ce que** chaque bloc de filtre sur la plaque de filtre intérieure (9) et la plaque de filtre extérieure (9a) reçoit un afflux de gaz bruts et entre la plaque de filtre intérieure et celle extérieure (9b, 9a), le canal d'afflux (12) pour le gaz épuré est formé, et **en ce que** les blocs de filtre sur leur extrémité supérieure et inférieure sont délimités de manière plane par des couvercles (27, 28) plats, hermétiques aux gaz et reliant les blocs de filtre, le couvercle supérieur (27) étant perforé de sorties pour les gaz épurés (13).

3. Séparateur filtrant selon la revendication 1 ou 2, **caractérisé en ce que** chaque bloc de filtre est délimité sur le côté par des parois cellulaires (25), les parois cellulaires (25) reliant entre eux les bords des plaques de filtre intérieures et extérieures (9a, 9b).

4. Séparateur filtrant selon l'une des revendications précédentes, **caractérisé en ce que** dans le carter filtre (2) est agencé un dispositif de jet d'air comprimé-nettoyage qui comprend un distributeur annulaire d'air comprimé (15) agencé tout autour à l'intérieur du carter de filtre (2) dans la chambre des gaz épurés (3) et de laquelle, par le biais de soupapes à réaction rapide (18), des lances de gicleurs (16) sont conduites en ligne droite par les sorties des gaz épurés (13).

5. Séparateur filtrant selon l'une des revendications précédentes, **caractérisé en ce que** les parois cellulaires (25) et les tôles cellulaires (7) sont positionnées en coupe en travers du carter de filtre (2) sur deux diagonales qui se croisent au centre dans le bloc de filtre (6).
